# EUROPEAN PATENT APPLICATION

(11) **EP 4 814 704 A1**
(43) Date of publication of application: **30.09.2026**
(21) Application number: 25167139.2
(22) Date of filing: 28.03.2025
(51) Int. Cl.: G06F 8/72, G06F 11/34, G06F 11/3604, G06F 11/362

(54) **IDENTIFYING INTERACTIONS BETWEEN SOFTWARE COMPONENTS IN A SOFTWARE SYSTEM**

(71) Applicant: British Telecommunications Public Limited Company, London E1 8EE (GB)
(72) Inventor: NOPPEN, Johannes, London, El 8EE (GB); ZIOLKOWSKI, Adam, London, El 8EE (GB); JOHNS, Jack, London, El 8EE (GB)
(74) Representative: British Telecommunications public limited company Intellectual Property Department

(57) **Abstract**

A computer-implemented method comprising: accessing source code for a software system from a codebase, the software system comprising a plurality of software components, each software component of the plurality of software components having an interface with at least another software component of the plurality of software components; receiving one or more pre-defined inputs for a first software component of the plurality of software components; obtaining a hypothesized model of at least a part of the software system, the hypothesized model defining one or more hypothesized interactions between the software components during processing of the one or more pre-defined inputs by the plurality of software components; obtaining one or more log statements relating to one or more historic executions of at least one software component of the plurality of software components, each log statement comprising a label indicative of the software component that generated it; identifying, using the one or more log statements and for each input from the one or more pre-defined inputs, one or more interactions between the software components; and generating, based on the identified one or more interactions, a respective association score for each of the one or more hypothesized interactions.

## Description

### FIELD

The present disclosure relates to identifying interactions between software components in a software system.

### BACKGROUND

Over time, expectations and use of software systems change, which leads to a desire to refactor and/or uplift the system and its architecture to adapt to these changes. For example, legacy software systems may become outdated due to changes in external libraries, its execution environment, or because there is a desire for improvement in the core attributes of the software system, such as speed or stability.

### SUMMARY

The present inventors have realised that maintenance, upkeep, and/or architectural transformation of legacy software systems tends to be a complex and costly process, particularly in instances where a developer has a limited understanding of the legacy system's architecture and the functions of respective software components (due to, for example, limited documentation and/or poor architecture of the legacy system). The maintenance, upkeep, and/or architectural transformation of the legacy software system typically requires an in-depth analysis and understanding of the system architecture to be able to identify bottlenecks and/or points for improvement, which can be a labour-intensive task that is error-prone due to its scale and complexity. In addition, in many cases, architectural transformation requires identifying and extracting worthwhile functionality to, for example, migrate it into the cloud, a task made significantly harder when only a limited understanding of the legacy system's architecture and components' functions is available.

According to a first aspect, there is provided a computer-implemented method comprising: accessing source code for a software system from a codebase, the software system comprising a plurality of software components, each software component of the plurality of software components having an interface with at least another software component of the plurality of software components; receiving one or more pre-defined inputs for a first software component of the plurality of software components; obtaining a hypothesized model of at least a part of the software system, the hypothesized model defining one or more hypothesized interactions between the software components during processing of the one or more pre-defined inputs by the plurality of software components; obtaining one or more log statements relating to one or more historic executions of at least one software component of the plurality of software components, each log statement comprising a label indicative of the software component that generated it; identifying, using the one or more log statements and for each input from the one or more pre-defined inputs, one or more interactions between the software components; and generating, based on the identified one or more interactions, a respective association score for each of the one or more hypothesized interactions.

The computer-implemented method may further comprise refactoring, based on the identified interactions between software components, the software components. The plurality of software components may be refactored into a plurality of microservices.

The software system may implement a telecommunications network service.

The step of obtaining the one or more log statements relating to the one or more historic executions of the at least one software component of the plurality of software components may comprise executing the source code. The execution of the source code may include: providing the one or more pre-defined inputs to the first software component of the plurality of software components; processing, by the plurality of software components, the one or more pre-defined inputs; and generating, using the plurality of software components, the log statements.

Obtaining the hypothesized model of at least a part of the software system may comprise: receiving a user input comprising the hypothesized model of the at least a part of the software system; or generating the hypothesized model of the at least a part of the software system.

The association score may be a probability value corresponding to the fraction of times the hypothesized interaction was identified. The associated score may be a probability value corresponding to the fraction of times the hypothesized interaction was identified in a specified chronological order defined in the hypothesized model of the software system.

The computer-implemented method may further comprise deleting, in response to an association score corresponding to an interaction being less than a threshold value, the interaction from the hypothesized model.

The hypothesized model may be a Unified Modelling Language, UML, diagram. The UML diagram may be a sequence diagram.

The computer-implemented method may further comprise obtaining trace data relating to the one or more historic executions of the at least one software component. The step of identifying interactions between software components may further comprise using the trace data.

According to a second aspect, there is provided a computer system comprising a processor configured to: access source code for a software system from a codebase, the software system comprising a plurality of software components, each software component of the plurality of software components having an interface with at least another software component of the plurality of software components; receive one or more pre-defined inputs for a first software component of the plurality of software components; obtain a hypothesized model of at least a part of the software system, the hypothesized model defining one or more hypothesized interactions between the software components during processing of the one or more pre-defined inputs by the plurality of software components; obtain one or more log statements relating to one or more historic executions of at least one software component of the plurality of software components, each log statement comprising a label indicative of the software component that generated it; identify, using the one or more log statements and for each input from the one or more pre-defined inputs, interactions between the software components; and generate, based on the identified one or more interactions, a respective association score for each of the one or more hypothesized interactions.

According to a third aspect, there is provided a computer program comprising instructions which, when the program is executed by a computer, cause the computer to carry out the method of any example in accordance with the first aspect.

According to a fourth aspect, there is provided a computer-readable data carrier having stored thereon the computer program in accordance with the third aspect.

### BRIEF DESCRIPTION OF THE FIGURES

Aspects of the present disclosure will now be described by way of example with reference to the accompanying figures. In the figures:
Figure 1 is a schematic illustration of a computer system suitable for implementing the methods described herein;
Figure 2 is a schematic diagram of a software system;
Figure 3 is a process flow chart showing certain steps of a method performed by the computer system;
Figure 4 is a sequence diagram of a hypothesized model of the software system; and
Figure 5 is a sequence diagram of an updated hypothesized model including details of observed behaviour of a plurality of software components of the software system.

### DETAILED DESCRIPTION

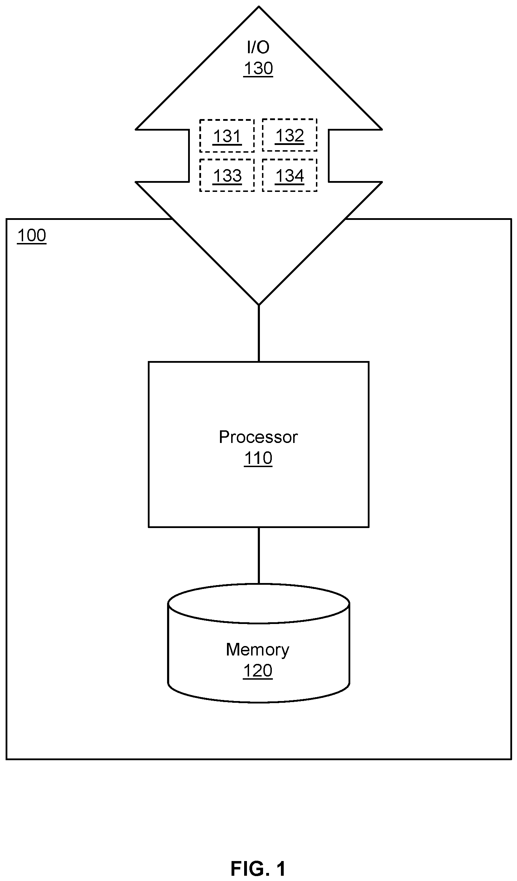

Figure 1 is a schematic illustration of an example computer system 100 capable of performing any of the methods described herein. It comprises a processor 110 operably coupled to both a memory 120 and an interface (I/O) 130.

The memory 120 can optionally comprise computer program instructions which, when the program is executed by the processor 110, cause the computer system 100 to carry out any of the methods described herein. Alternatively, or additionally, the interface 130 can optionally comprise one or both of a physical interface 131 configured to receive a data carrier having such instructions stored thereon and a receiver 132 configured to receive a data carrier signal carrying such instructions.

The receiver 132, when present, can be configured to receive messages. It can comprise one or more wireless receiver modules and/or one or more wired receiver modules. The interface 130 can optionally comprise a transmitter 133 configured to transmit messages. The transmitter 133, when present, can comprise one or more wireless transmitter modules and/or one or more wired transmitter modules.

The interface 130 can optionally comprise one or more user interface devices 134.

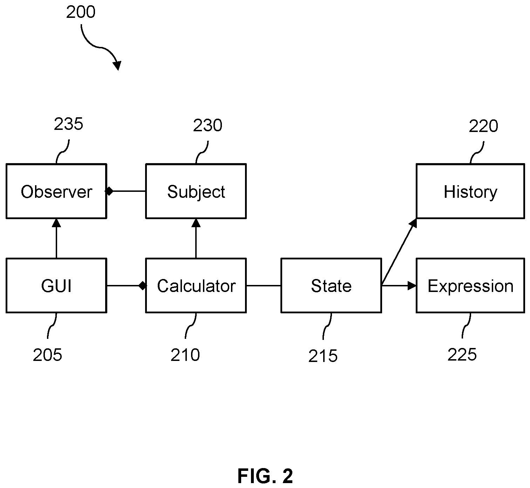

Figure 2 is a schematic diagram of a legacy software system 200.

In this embodiment, the legacy software system 200 is a calculator system. The legacy software system 200 comprises a plurality of software components. The plurality of software components comprises a Graphical User Interface (GUI) 205, a calculator 210, a state 215, a history 220, an expression 225, a subject 230, and an observer 235.

The GUI 205 is configured to receive a user input of a desired calculation to be performed by the calculator 210. The calculator 210 is configured to perform the desired calculation based on the user input. The state 215 is configured to store a current calculation being performed and the result thereof. The history 220 is configured to store (i.e., keep track of) a history of performed calculations. The expression 225 is configured to define mathematical operators. The subject 230 is configured to receive updates from the calculator (i.e., when a result of a calculation has been computed) and to notify the observer 235. The observer 235 is configured to trigger an update in the GUI 205 to display an output for the user.

There tends to be a desire to perform refactoring of legacy software systems 200. For example, legacy software systems 200 may be refactored from a monolithic architecture to a microservice architecture. Software refactoring typically involves in-depth analysis, rearchitecting and a comprehensive reimplementation of the legacy software system while ensuring functional equivalence upon completion. Accordingly, software refactoring tends to require a substantial understanding of the design and architecture of the legacy system, which can be amplified when the system is intended to undergo fundamental architectural changes, for example when migrating from a monolithic desktop to a cloud-based web-application.

To perform refactoring on legacy software systems 200, developers tend to require an in-depth understanding of their design, structure and architecture. In some cases, such information may not be readily available. For example, some legacy software systems 200 may have been developed in the past and the information lost or not recorded. Thus, documentation may be sparse, limited and/or incomplete, and the original developers of the legacy software system may be inaccessible. A challenge therefore lies in trying to understand the legacy software systems 200 from this limited information and the source code itself.

Furthermore, there may exist a desire to perform maintenance on the legacy software system 200. Software maintenance typically involves keeping the legacy system 200 working in its current incarnation without an intention of fundamentally changing its design or mode of operation (i.e., software maintenance involves making updates to the software and its deployment to ensure it can continue working as intended). For example, software maintenance can include fixing bugs or keeping software compatible with external libraries and/or an execution environment, each of which may change over time and break normal operation if unaddressed. Similarly to software refactoring, software maintenance of legacy software systems 200 may require an in-depth understanding of the legacy software system's 200 design, structure and architecture.

Certain legacy software systems 200 may be of monolithic architecture and of substantial size, with the number of lines of code often exceeding 500,000 lines. Accordingly, existing tools for understanding legacy software system 200 architecture may not provide a sufficiently accurate representation for maintenance or refactoring.

Thus, the present inventors have realised that there exists a desire for systems and methods to identify and/or verify interactions between software components in a legacy software system 200 to facilitate refactoring and/or maintenance of the legacy software system 200.

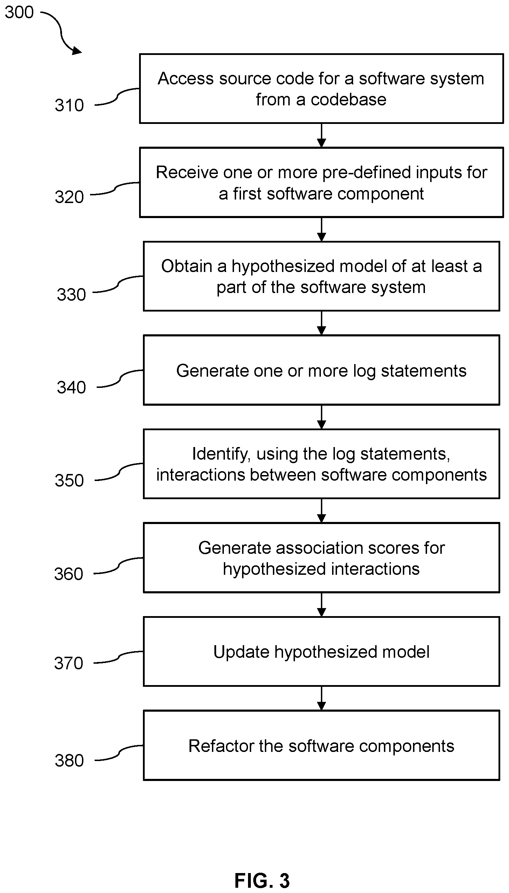

What will now be described with reference to Figures 3 to 5 is a method for addressing the aforementioned problems.

Figure 3 is a flowchart depicting certain steps of a method 300 performed by a computer system. For example, the method 300 may be performed by the computer system 100 as described above with reference to Figure 1.

At a first step 310, the computer system 100 accesses source code for a software system from a codebase. At least a part of the source code is configured to implement the legacy software system 200. The codebase may be stored locally in the computer system 100. For example, the codebase may be stored in the memory 120 of the computer system 100. Alternatively, the codebase may be stored externally to the computer system 100, in which case the computer system 100 may access the codebase via a communication network such as an intranet, the internet, or any other communication networks.

The software system comprises a plurality of software components. Each software component of the plurality of software components has an interface with at least another software component of the plurality of software components. In other words, each software component of the plurality of software components may interact (e.g., communicate), during execution of the source code, with at least another software component of the plurality of software components.

At a second step 320, the computer system 100 receives one or more pre-defined inputs for a first software component of the plurality of software components. The first software component may be, for example, a user interface such as the GUI 205. The one or more pre-defined inputs may be a range of inputs for which a user or developer seeks to identify interactions between software components.

At a third step 330, the computer system 100 obtains a hypothesized model of at least a part of the software system. For example, the computer system 100 may receive a user input comprising the hypothesized model of the at least a part of the software system. The hypothesized model defines hypothesized interactions between the software components during processing of the one or more pre-defined inputs by the plurality of software components. The hypothesized model may be a Unified Modelling Language (UML) diagram. For example, the hypothesized model may be a sequence diagram. The sequence diagram may define a posited workflow that is hypothesized to exist in the software system (i.e., a sequence of events and exchanges expected to occur when the system is presented with the one or more pre-defined inputs).

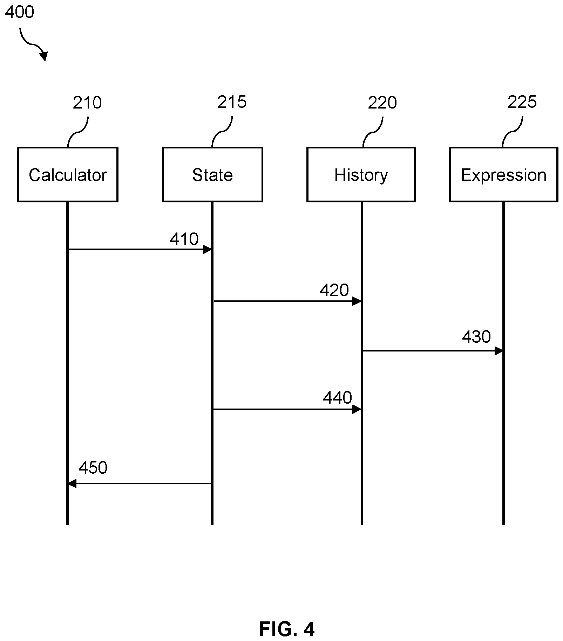

By way of example, Figure 4 is a sequence diagram depicting the hypothesized model 400 of the at least a part of the software system. In this embodiment, the calculator 210 is hypothesized to interact with the state 215 at a first step 410. Subsequently, the state 215 is hypothesized to interact with the history 220 at a second step 420. Subsequently, the history 220 is hypothesized to interact with the expression 225 at a third step 430. Subsequently, the state 215 is hypothesized to interact with the history 220 at a fourth step 440. Subsequently, the state 215 is hypothesized to interact with the calculator 210 at a fifth step 450.

Referring back to Figure 3, at a fourth step 340, the computer system 100 generates, using the plurality of software components, one or more log statements. Each of the generated log statements comprises a label indicative of the software component that generated it. Log statements include log data indicative of one or more events occurring in a software system at the time of the generation of the log statement.

In this embodiment, generating the one or more log statements comprises executing the source code. The computer system 100 may instantiate a sandbox environment in which the source code is executed. Executing the source code includes providing the one or more pre-defined inputs to the first software component of the plurality of software components. Executing the source code further includes processing, using the plurality of components, the one or more pre-defined inputs. For example, the first software component may process a pre-defined input and provide a first output. The first output may be a second input for a second software component of the plurality of software components. In such an example, the second software component has an interface with the first software component, whereby to communicate with the first software component. The second software component may process the second input and may provide a second output. The second output may be a third input for a third software component of the plurality of software components, and so on. The plurality of software components may be configured to provide a respective output for each of the one or more pre-defined inputs.

The fourth step 340 may further comprise elastically scaling a storage for the log statements. More specifically, the method may further comprise allocating additional memory resources for the log statements and/or deallocating memory resources for the log statements based on a demand (due to, for example, a quantity of inputs being processed, an expected runtime, and so on).

Typically, log statements do not include explicit labels of the software component that generated them. Accordingly, the source code accessed by the computer system (e.g., at the first step 310) may comprise source code that implements the legacy software system 200 and additional code for labelling log statements according to the software components that generated them (e.g., by updating the code of the logging functionality of the legacy software system 200). Alternatively, log statements may be labelled retroactively, or by instrumenting and wrapping the legacy software system's 200 code through technologies such as aspect-oriented programming. Advantageously, providing labels indicative of the software component that generated a log statement provides means to identify which software component triggered an event. For example, the log statements provide means to identify a software component that generated an output, and a further software component that received the generated output as an input.

In some embodiments, instead of generating the log statements, the method may comprise obtaining the log statements in a different way, for example the method may comprise accessing the log statements from a memory location (either local or via a communications network such as an intranet or the internet).

At a fifth step 350, the computer system 100 identifies, using the log statements and for each input from the one or more pre-defined inputs, interactions between the software components. More specifically, the computer system 100 uses the log statement labels to identify the interactions between software components that took place during the processing of each of the one or more pre-defined inputs.

At a sixth step 360, the computer system 100 generates, based on the identified interactions, a respective association score for each of the hypothesized interactions. The association score may be a probability value corresponding to the fraction of times the hypothesized interaction was identified in a specified chronological order defined in the hypothesized model 400. The association scores may be used to verify the accuracy of the hypothesized interactions in the hypothesized model. In other words, the association score may be used for causal analysis of the hypothesized interactions.

At a seventh step 370, the computer system 100 updates, based on the identified interactions between software components, the hypothesized model 400. The hypothesized model 400 may be updated to include one or more additional interactions and assigning association scores thereto. The additional interaction may be included in the hypothesized model in response to a threshold number of appearances of the interaction in the log statements.

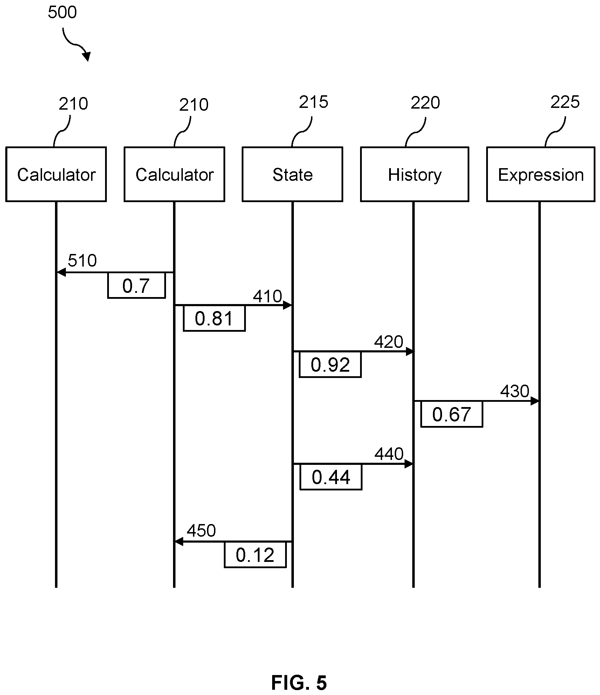

By way of example, Figure 5 is a sequence diagram of an updated hypothesized model 500, wherein each of the hypothesized interactions are annotated with a respective association score.

The updated hypothesized model 500 has been updated, based on information uncovered by the log statements, to include an additional interaction depicted by a preliminary step 510. Accordingly, in this embodiment, the calculator 210 is initially hypothesized to interact with the calculator 210 at a preliminary step 510 (e.g., by a self-call). Subsequently, the calculator 210 is hypothesized to interact with the state 215 at a first step 410. Subsequently, the state 215 is hypothesized to interact with the history 220 at a second step 420. Subsequently, the history 220 is hypothesized to interact with the expression 225 at a third step 430. Subsequently, the state 215 is hypothesized to interact with the history 220 at a fourth step 440. Subsequently, the state 215 is hypothesized to interact with the calculator 210 at a fifth step 450.

In this embodiment, the preliminary step 510 occurred for 70% of the one or more pre-defined inputs. The first step 410 occurred 81% of the time after the preliminary step 510. The second step 420 occurred 92% of the time after the first step 410. The third step 430 occurred 67% of the time after second step 420. The fourth step 440 occurred 44% of the time after the third step 430. The fifth sequence step 450 occurred 12% of the time after the fourth step 440.

Referring back to Figure 3, the seventh step 370 may further comprise deleting or replacing, in response to an association score corresponding to an interaction being less than a threshold value, the interaction from the updated hypothesized model 500. For example, the threshold value may be a probability value of 0.65.

Accordingly, with reference to Figure 5, the fourth step 440 and the fifth step 450 may be deleted or replaced.

The seventh step 370 may further comprise accepting, in response to an association score corresponding to an interaction being above the threshold value, the interaction in the updated hypothesized model 500. The accepted hypothesized interaction may be considered to be inferred based on causal reasoning (i.e., the hypothesized interaction is causally inferred based on the association scores).

At an eighth step 380, the method comprises refactoring, based on the identified interactions between software components, the software components. For example, the plurality of software components may be refactored into a plurality of microservices. The refactoring may be done based on the updated hypothesized model 500.

In the above embodiments, the software system 200 is a calculator system. In other embodiments, however, the software system 200 is different type of software system other than a calculator system. For example, the software system 200 may implement a telecommunications network service such as a voicemail service, an on-demand video streaming service, an internet access service, or other telecommunications network service.

In the above embodiments, the hypothesized model 400 is a sequence diagram. In other embodiments, however, the hypothesized model 400 may be a different type of UML diagram. For example, the hypothesized model 400 may be a class diagram, a component diagram, a deployment diagram, or any other UML diagram.

In the above embodiments, the association score is a probability value corresponding to the fraction of times the hypothesized interaction was identified in a specified chronological order defined in the hypothesized model 400. In other embodiments, however, the association score is a probability value corresponding to the fraction of times the hypothesized interaction was identified irrespective of any specified chronological order.

In the above embodiments, the method 300 comprises refactoring, based on the identified interactions between software components, the software components. In other embodiments, however, the method may alternatively or additionally comprise performing maintenance of the software components.

In some embodiments, the method 300 may further comprise generating, using the plurality of software components and during execution of the source code, trace data. Alternatively, the method 300 may further comprise obtaining trace data from the one or more historic executions of at least one software component of the plurality of software components. The step of identifying the one or more interactions between the software components may comprise using the trace data. The log statements may be considered an example of trace data, but further trace data at various level of abstraction can exist and be usefully exploited in this space. Examples include network communication traces, distributed software tracing and observability and execution reflection tools. Due to differences in the areas and details captured, the information that can be extracted from these would be strongly complementary to the log information and therefore tend to yield better results.

Advantageously, the above-described methods provide means to identify interactions between software components and/or verify hypothesized interactions between software components based on causal analysis and statistical inference rather than using in-depth architectural analysis which is resource intensive and tends to be error-prone for source codes of substantial size and/or software systems having highly coupled components. Conventional methods and apparatuses for source code analysis tend to require following invocations across a call trace and piecing together whether a component interaction was incidental (e.g., whether the interaction occurred during non-standard execution, when a fault occurs, or during a maintenance mode). Advantageously, the methods described herein do not face such a problem because component dependencies and their involvement in a workflow can be determined using the principles of statistics based on externally observable logging data that can be captured automatically.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method comprising:
accessing source code for a software system from a codebase, the software system comprising a plurality of software components, each software component of the plurality of software components having an interface with at least another software component of the plurality of software components;
receiving one or more pre-defined inputs for a first software component of the plurality of software components;
obtaining a hypothesized model of at least a part of the software system, the hypothesized model defining one or more hypothesized interactions between the software components during processing of the one or more pre-defined inputs by the plurality of software components;
obtaining one or more log statements relating to one or more historic executions of at least one software component of the plurality of software components, each log statement comprising a label indicative of the software component that generated it;
identifying, using the one or more log statements and for each input from the one or more pre-defined inputs, one or more interactions between the software components; and
generating, based on the identified one or more interactions, a respective association score for each of the one or more hypothesized interactions.

2. The computer-implemented method of claim 1, further comprising:
refactoring, based on the identified interactions between software components, the software components.

3. The computer-implemented method of claim 2, wherein the plurality of software components is refactored into a plurality of microservices.

4. The computer-implemented method of any preceding claim, wherein the software system implements a telecommunications network service.

5. The computer-implemented method of any preceding claim, wherein the step of obtaining the one or more log statements relating to the one or more historic executions of the at least one software component of the plurality of software components comprises executing the source code, the execution of the source code including:
providing the one or more pre-defined inputs to the first software component of the plurality of software components;
processing, by the plurality of software components, the one or more pre-defined inputs; and
generating, using the plurality of software components, the log statements.

6. The computer-implemented method of any preceding claim, wherein the step of obtaining a hypothesized model of at least a part of the software system further comprises:
receiving a user input comprising the hypothesized model of the at least a part of the software system.

7. The computer-implemented method of any preceding claim, wherein the association score is a probability value corresponding to the fraction of times the hypothesized interaction was identified.

8. The computer-implemented method of any of claims 1 to 6, wherein the association score is a probability value corresponding to the fraction of times the hypothesized interaction was identified in a specified chronological order defined in the hypothesized model of the software system.

9. The computer-implemented method of any preceding claim, further comprising:
deleting, in response to an association score corresponding to an interaction being less than a threshold value, the interaction from the hypothesized model.

10. The computer-implemented method of any preceding claim, wherein the hypothesized model is a Unified Modelling Language, UML, diagram.

11. The computer-implemented method of claim 10, wherein the UML diagram is a sequence diagram.

12. The computer-implemented method of any preceding claim, further comprising:
obtaining trace data relating to the one or more historic executions of the at least one software component; wherein the step of identifying interactions between software components further comprises using the trace data.

13. A computer system comprising a processor configured to:
access source code for a software system from a codebase, the software system comprising a plurality of software components, each software component of the plurality of software components having an interface with at least another software component of the plurality of software components;
receive one or more pre-defined inputs for a first software component of the plurality of software components;
obtain a hypothesized model of at least a part of the software system, the hypothesized model defining one or more hypothesized interactions between the software components during processing of the one or more pre-defined inputs by the plurality of software components;
obtain one or more log statements relating to one or more historic executions of at least one software component of the plurality of software components, each log statement comprising a label indicative of the software component that generated it;
identify, using the one or more log statements and for each input from the one or more pre-defined inputs, one or more interactions between the software components; and
generate, based on the identified one or more interactions, a respective association score for each of the one or more hypothesized interactions.

14. A computer program comprising instructions which, when the program is executed by a computer, cause the computer to carry out the method of any of claims 1 to 12.

15. A computer-readable data carrier having stored thereon the computer program of claim 14.
